# EUROPEAN PATENT SPECIFICATION

(11) **EP 3 780 858 B1**
(45) Date of publication and mention of the grant of the patent: **31.07.2024**
(21) Application number: 18913978.5
(22) Date of filing: 05.04.2018
(51) Int. Cl.: H04W 74/0833, H04L 5/00, H04W 74/00

(54) **USER EQUIPMENT**
BENUTZERGERÄT
ÉQUIPEMENT DE L'UTILISATEUR

(43) Date of publication of application: 17.02.2021
(73) Proprietor: NTT DOCOMO, INC., Chiyoda-ku Tokyo 100-6150 (JP)
(72) Inventor: OHARA, Tomoya, Tokyo 100-6150 (JP); HARADA, Hiroki, Tokyo 100-6150 (JP)
(74) Representative: Hoffmann Eitle
(86) International application number: PCT/JP2018/014638
(87) International publication number: WO 2019/193727

(56) References cited:
- WO-A1-2018/012619
- LG ELECTRONICS: "RACH procedure", vol. RAN WG1, no. Athens, Greece; 20180226 - 20180302, 16 February 2018 (2018-02-16), XP051397190, Retrieved from the Internet <URL:http://www.3gpp.org/ftp/tsg%5Fran/WG1%5FRL1/TSGR1%5F92/Docs/> [retrieved on 20180216]
- QUALCOMM: "Summary of Remaining Details on RACH Procedure", vol. RAN WG1, no. Prague, CZ; 20171009 - 20171013, 12 October 2017 (2017-10-12), XP051353503, Retrieved from the Internet <URL:http://www.3gpp.org/ftp/tsg_ran/WG1_RL1/TSGR1_90b/Docs/> [retrieved on 20171012]
- INTEL CORPORATION: "4-step PRACH procedures", 3GPP TSG RAN WG1 NR ADHOC #2 R1-1710513, 26 June 2017 (2017-06-26), XP051299720

## Description

### Technical Field

The present invention relates to user equipment for a wireless communication system.

### BACKGROUND ART

3GPP (3rd Generation Partnership Project) is discussing a wireless communication method called NR (New Radio) or 5G in order to realize further increase in system capacity, further increase in data transmission speed, and further decrease in latency in radio sections (see Non-Patent Document 1, for example). For NR, various radio technologies are discussed for satisfying a certain requirement, that is, throughput of 10Gbps or more and radio section latency of 1ms or less.

It is envisaged that, in NR, a wide frequency ranging from a low frequency band as low as LTE to a higher frequency band than LTE. Especially, the application of beam forming with a higher beam gain is discussed in order to compensate for the increase in transmission loss in a higher frequency band. When transmitting a signal using beam forming, a base station or a user equipment may determine the direction of a transmitted beam such that it results in a better reception quality at a counterpart of the communication.

Non Patent Document 2 describes a RACH procedure for an NR system. The network may trigger the RACH procedure using the PDCCH order.

Non Patent Document 3 describes details of the RACH procedure. It is proposed that UE may assume that the PDCCH DMRS and PDSCH DMRS conveying Msg2 are QCL'ed with the SS block which is associated with the preamble/RACH occasion which the UE sent.

### RELATED-ART DOCUMENTS

### Non Patent Document

Non Patent Document 1: 3GPP TS 38.300 v15.0.0(2017-12)
Non Patent Document 2: 3GPP contribution R1-1802185, and
Non Patent Document 3: 3GPP contribution R1-1719025.

### SUMMARY OF THE INVENTION

### PROBLEM TO BE SOLVED BY THE INVENTION

It is envisaged that, in NR, a random access procedure similar to that in LTE will be employed. A problem may exist that user equipment may fail to receive a random access response in an appropriate manner if the above-mentioned beam forming is applied.

In light of the problem discussed above, an object of the present invention is to provide a technique which enables a user equipment to receive a random access response in an appropriate manner in a wireless communication system where beam forming is implemented.

### MEANS TO SOLVE THE PROBLEM

This object is accomplished by the subject-matter of the independent claims. The dependent claims concern particular embodiments.

### EFFECT OF THE INVENTION

The disclosed technique enables the user equipment to receive the random access response in an appropriate manner in the wireless communication system wherein the beam forming is implemented.

### BRIEF DESCRIPTION OF THE DRAWINGS

Fig. 1 is a schematic drawing showing a communication system;
Fig. 2 is a schematic drawing showing an example of random access procedure;
Fig. 3 is a schematic drawing showing the relation between beams and RACH;
Fig. 4 is a schematic drawing showing an example of beam management;
Fig. 5 is a schematic drawing for explaining CORESET;
Fig. 6 is a schematic drawing for explaining the sequence of an exemplary operation 1;
Fig. 7 is a schematic drawing for explaining the sequence of an exemplary operation 2;
Fig. 8 is a schematic drawing for explaining the sequence of an exemplary operation 3;
Fig. 9 is a schematic drawing for explaining exemplary processing associated with bandwidth part;
Fig. 10 is a block diagram showing an exemplary functional structure of user equipment 10;
Fig. 11 is a block diagram showing an exemplary functional structure of base station 20; and
Fig. 12 is a block diagram showing a hardware structure of user equipment 10 and base station 20.

### MODES FOR CARRYING OUT THE INVENTION

In the following, embodiments of the present invention will be described with reference to the drawings. It is noted that the following embodiments are exemplary, and the present invention may be applicable to other embodiments which are not described below.

A wireless communication system according to the embodiment described below is basically assumed to comply with NR, which is an example. The wireless communication system according to the embodiment may entirely or partially comply with wireless communication system (LTE, for example).

In addition, in the following description, the user equipment 10 is to monitor Msg2 with a search space as a resource to which a certain CORESET has been applied, which is an example. The user equipment 10 may monitor Msg2 with a resource other than the search space to which a certain CORESET has been applied.

In the following description, when Msg2 and SSB have QCL relation, PDSCH carrying substantive information of Msg2 and SSB may have the QCL relation, or PDCCH scheduling Msg2 and SSB may have the QCL relation, or may be both.

### (CONFIGURATION OF ENTIRE SYSTEM)

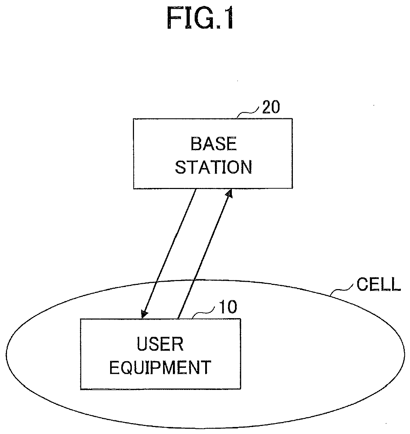

Fig. 1 is a schematic drawing showing a wireless communication system according to the embodiment. The wireless communication system according to the embodiment may include a user equipment 10 and a base station 20 as shown in Fig. 1. Fig. 1 shows one each of the user equipment 10 and the base station 20, which is exemplary, and any number of user equipment 10 and base station 20 may be included in the system.

The user equipment 10 may be a communication device with wireless communication function, such as a smart phone, a cellular phone, a tablet, a wearable terminal, a M2M (Machine-to-Machine) communication module, and may be wirelessly connected to the base station 20 to utilize various communication services provided by the wireless communication system. The base station 20 is a communication device to provide one or more cells to wirelessly communicate with user equipment 10. Both of the user equipment 10 and the base station 20 may transmit/receive signals after beam forming. In addition, the user equipment 10 may be referred to as UE and the base station 20 may be referred to as eNB.

In the embodiment, Duplex method may be TDD (Time Division Duplex) method or FDD (Frequency Division Duplex) method.

In addition, in the following description of the embodiment, the transmission of a signal with a beam is synonymous with the transmission of a signal multiplied by a precoding vector (or a pre-coded signal with a precoding vector). In addition, the transmission of a signal with a beam may be represented as the transmission of the signal with a specific antenna port. The antenna port refers to a logical antenna port defined in 3GPP specifications. In addition, the method of beam forming is not limited to those mentioned above. For example, for a user equipment 10 with multiple antenna elements and a base station 20 with multiple antenna elements, the angle of respective antenna elements may be changed, or the use of precoding vector and the changing of antenna element angle may be combined, or any other suitable method may be used.

The embodiment relates to beam forming and random access of NR and thus, an exemplary operation of those in a wireless communication system is described first.

### (RANDOM ACCESS PROCEDURE)

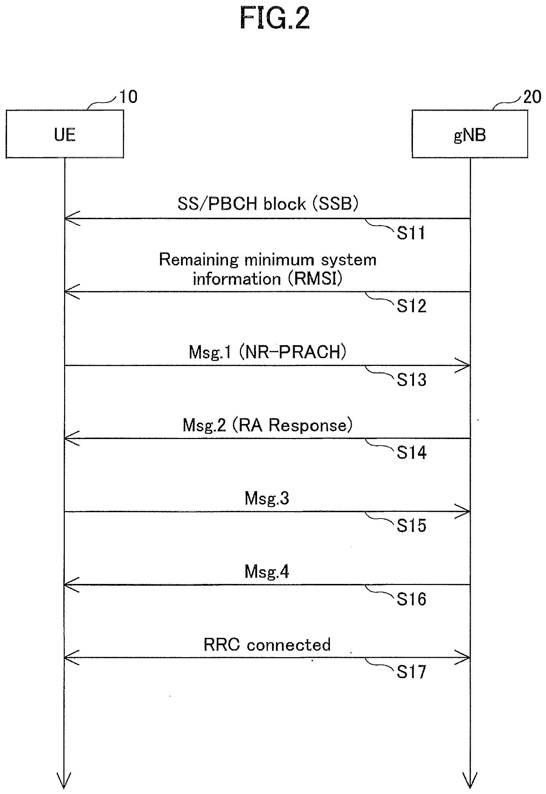

Referring to Fig. 2, an example of random access procedure according to the embodiment is described. The procedure shown in Fig. 2 may be referred to as an initial access.

The base station 20 transmits SS/PBCH block (may be referred to as SSB) at a predetermined cycle, and the user equipment 10 may receive the SS/PBCH block (S11). SS/PBCH block includes synchronization signal and a part of system information required for the initial access (system frame number (SFN), information required for reading remaining system information, and so on). The user equipment 10 receives RMSI from the base station (S12). For example, RMSI includes SIB1 information of LTE.

Then, the user equipment 10 transmits Message 1 (Msg1 (RA preamble)) (S13).

If the base station 20 detects RA preamble, the base station 20 transmits Message2 (Msg2 (=RA response)), which is a response to the RA preamble, to the user equipment (S13). In the following description, "Msg2" includes PDCCH used for scheduling thereof and PSDCH to carry its material information.

If the user equipment 10 receives RA response, the user equipment transmits Message 3 (Msg3) including predetermined information to the base station 20 (step S15). Message 3 may be RRC connection request, for example.

If the base station 20 receives Message3, the base station 20 transmits Message 4 (Msg4, RRC connection setup, for example) to the user equipment 10 (S16). If the user equipment 10 confirms that Message 4 includes the predetermined information, the user equipment 10 recognizes that the above Message 4 corresponds to the above Message 3 and addressed to the user equipment 10 itself, and completes the random access procedure to establish RRC connection (S17). It is noted that Fig. 2 shows an example in which Message 3 and Message 4 are transmitted, which is merely an example. The embodiment may be applicable to random access procedure in which both Message 3 and Message 4 are not transmitted.

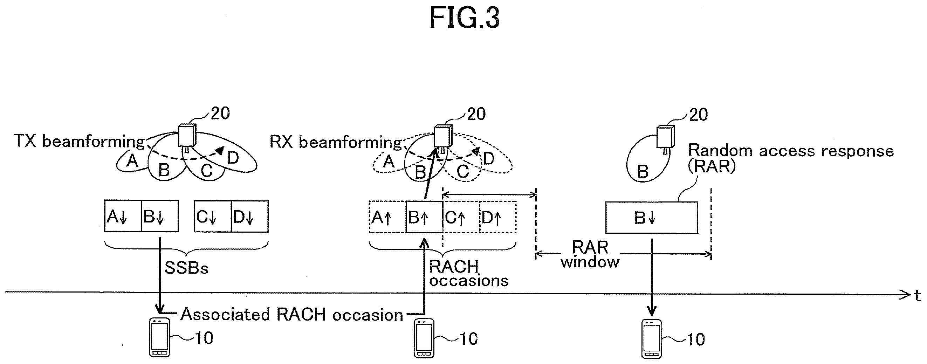

Fig. 3 is a schematic drawing showing an example of a user equipment 10 selecting a beam under multi-beam operation. In the example shown in Fig. 3, the base station 20 transmits SSB in each of four transmission beams marked A, B, C and D. For example, SSB-A may be transmitted in beam A, SSB-B may be transmitted in beam B, SSB-C may be transmitted in beam C, and SSB-D may be transmitted in beam D.

The user equipment 10 may select SSB with the highest reception power, for example, and transmits RA preamble with resource B tied to the index of the selected SSB. It is noted that a resource to transmit RA preamble is referred to as RACH occasion. Then, for example, the base station 20 learns, from the reception of RA preamble with the resource B, that the transmission beam B has been selected as a transmission beam to the user equipment 10, and transmit RA response using the transmission beam B. The user equipment 10 is notified of the relation between SSB (beam) and RACH occasion in advance.

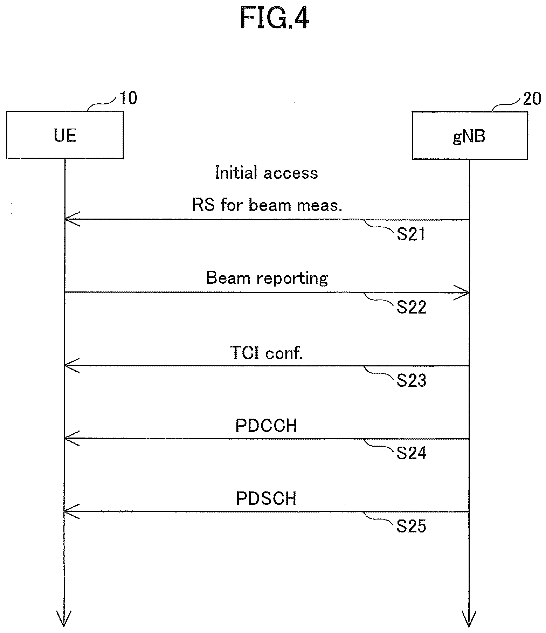

Fig. 4 shows an exemplary operation related to beam management. As shown in Fig. 4, after the initial access, the user equipment 10 measures each beam by receiving RS (Reference Signal, CSI-RS, for example) or SSB transmitted beam by beam from the base station 20 (S21), and transmits RS resource indexes (or SSB indexes) and measurement results (RSRP) to the base station 20 as beam reporting (S22). The beam reporting may be performed for each beam of the user equipment 10.

In S23, the base station 20 transmits the configuration information of TCI (Transmission Configuration Indication) to the user equipment 10. This information may include information (QCL relation) indicating binding between SSB information and DM-RS antenna port. However, this is merely an example.

The user equipment 10 uses the above-noted information to assume the transmission beam used by the base station 20 and receive (and demodulate) PDCCH and PDSCH (S24, S25).

A description on QCL (Quasi Co-Location) is given below. Two antenna ports being QCLed means the large-scale properties of signals received from one antenna port (or a wireless channel corresponding to the antenna port) and the large-scale properties of signals from another antenna port (or a wireless channel corresponding to the antenna port) are partially or entirely the same. The large-scale properties may include Doppler shift, Doppler spread related to frequency offset, delay spread, and average delay related to timing offset, for example, and may further include average gain.

For example, if the antenna port of SSB (or the antenna port of CSI-RS) has QCL relation with (the antenna port of DM-RS of) PDCCH, the user equipment 10 may expect them to be received with the same downlink beam.

### (Regarding PDCCH order)

According to the present embodiment, for example, if it is possible that the user equipment 10 in a connection state is out of UL synchronization, the base station 20 triggers RACH to the user equipment 10 with PDCCH order.

At that time, Preamble index (6 bits) and PRACH Mask Index (4 bits), for example, may be notified to the user equipment 10 with DCI format 1A. Such information may be notified with RRC signaling.

The user equipment 10 may perform contention free RACH procedure by transmitting Preamble of specified Preamble index. In addition, if a certain preamble index is specified, the user equipment 10 may perform contention-based RACH procedure. PRACH mask index is information that notifies which time resource position among RACH resources specified by RACH configuration index (in RACH configuration table). In NR, the above-mentioned Preamble index, PRACH Mask Index and DCI format, for example, may be notified in different bit size or with different format.

It is assumed that, in NR, TCI (transmission configuration indicator) state has been introduced. The user equipment 10 can learn QCL relation between antenna ports based in the TCI state which is configured.

In addition, in NR, one or more CORESETs are configured from the base station 20 to the user equipment 10, and the correspondence between the CORESETs and Search spaces are configured from the base station 20 to the user equipment 10. CORESET is an abbreviation for control resource set, and indicates a box of resources to which the user equipment 10 should monitor the control signal (PDCCH). For example, one CORESET is a region which consists of multiple resource blocks in frequency direction and one, two or three OFDM symbols in time direction. For each search space, CORESET to be allocated and the time position and cycle of the CORESET are specified. In addition, TCI state is set in CORESET. TCI state being set in CORESET means, for example, the configuration information of the CORESET includes ID of TCI state.

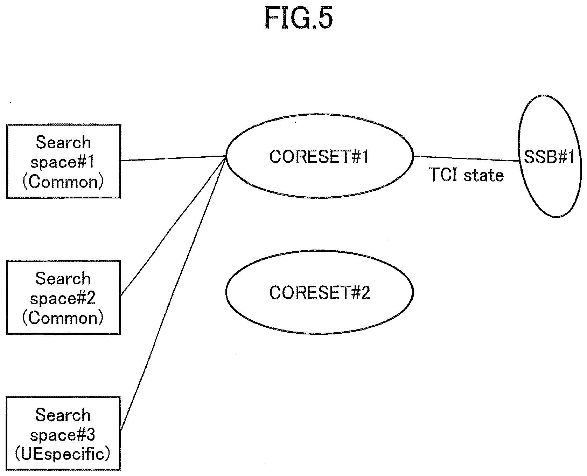

For example, in the example shown in Fig. 5, Search space #1 through #3 are tied to CORESET #1, and TCI state is set as indicating the CORESET #1 having QCL relation with SSB #1. For example, the user equipment 10 monitoring Search space which uses CORESET #1 can perform an operation to receive a control signal (hereinafter, which may be referred to as control information) with a beam with which SSB #1 is transmitted.

Receiving the control signal (PDCCH) with a beam with which SSB #1 is transmitted means receiving PDCCH assuming PDCCH in QCL relation with SSB #1 being transmitted from the base station 20.

In addition, receiving the control signal (PDCCH) with a beam in which SSB #1 is transmitted means, for example, demodulating PDCCH with a signal at the antenna port of DM-RS of the PDCCH corresponding to the antenna port of SSB #1. In addition, receiving a control signal (PDCCH) with a beam in which SSB #1 is transmitted may mean forming a reception beam corresponding to the beam in which SSB #1 is transmitted to receive PDCCH.

It is noted that multiple TCI states may be set to a user equipment 10 with RRC signaling for a CORESET, and one of the multiple TCI states may be dynamically selected with DCI or MAC CE, for example, from the base station 20.

### (Regarding an object)

Regarding the above-mentioned PDCCH order, the user equipment 10 may receive Msg2 assuming the DM-RS of the received PDCCH order and DM-RS of PDCCH of Msg2 to be received resulting from the PDCCH order have QCL relation with the same SSB (or CSI-RS).

The base station 20 specifies RACH occasion index of 9 bits, for example, by DCI of PDCCH order so as to obtain the above-mentioned QCL relation, and the user equipment 10 transmits Msg1 with the specified RACH occasion. The base station 20 transmits Msg2 with a transmission beam corresponding to the RACH occasion. It is noted that, for example, 6 bits of 9-bit index is the SSB index, and remaining 3 bits indicate a value to specify RACH occasion index corresponding to the SSB index.

According to the above-mentioned method (which may be referred to as Scheme 1 for convenience), the QCL of Msg2 (RAR) is uniquely determined upon the reception by the user equipment 20 of PDCCH order transmitted by the base station 20.

In the above-mentioned method, the user equipment 10 transmits Msg1 with RACH occasion specified by PDCCH order; however, the user equipment 10 may select SSB (that is, RACH occasion) and transmit Msg1 with the selected RACH occasion after the reception of PDCCH order. This method may be referred to as Scheme 2 for convenience. For this method, Msg2 received by the user equipment 10 from the base station after the transmission of Msg1 has QCL relation with SSB selected by the user equipment 10. That is, the user equipment 10 can receive Msg2 assuming that Msg2 is to be transmitted with a transmission beam of the selected SSB.

Scheme 2 is an example in the case of contention free random access and the case in which the SSB is selected by the user equipment 10 (not specified by NW). In PDCCH order according to the present embodiment, contention based random access may be specified, which case the user equipment 10 may select SSB. Msg2 has QCL relation with the selected SSB.

In the case of PDCCH order RACH (RACH procedure triggered by PDCCH order), if the user equipment 10 can select SSB freely or under a certain condition when selecting a resource (RACH occasion) for Msg1, there is a problem as described below.

As described with respect to the above-mentioned Scheme 2, in this case, Msg2 to be transmitted from the base station 20 after the transmission of Msg1 from the user equipment 10 will have QCL relation with the selected SSB. However, the CORESET of search space which received PDCCH order triggering RACH may not have QCL relation with the selected SSB.

That is, for example, when the user equipment 10 uses CORESET #1 associated with SSB #1 as CORESET for monitoring PDCCH order, the user equipment 10 receives PDCCH order with a resource having QCL relation with SSB #1. After then, if the user equipment 10 selected SSB #2 for the transmission of Msg1, the base station 20 transmits Msg2 with a beam based on SSB #2.

However, there may be a problem that the user equipment 10, using CORESET #1 for monitoring PDCCH, cannot receive the Msg2 (in more detail, PDCCH for Msg2) satisfactorily.

Hereinafter, exemplary operations 1 through 4 will be described for solve the problems. It is noted that, in the examples described below, although random access procedure in which Msg3 and Msg4 are transmitted is described as an example, the exemplary operations 1-4 may be similarly applicable to random access procedure in which Msg3 and Msg4 are not transmitted.

### (EXEMPLARY OPERATION 1)

In the exemplary operation 1, CORESET (which may be referred to a dedicated CORESET for convenience) dedicated for RACH procedure by PDCCH order is set to the user equipment 10. For example, the dedicated CORESET is received by the user equipment 10 from the base station 20 as configuration information during RRC connection. In addition, the dedicated CORESET may be preconfigured by the user equipment 10.

The dedicated CORESET is used for the search space set in the user equipment 10 at the time of reception of PDCCH order. As an example, if the user equipment 10 receives PDCCH order in the search space #1 to which CORESET #1 is applied, the user equipment 10 switches CORESET from CORESET #1 to the dedicated CORESET, and after that, receives the control information in the search space #1 to which the dedicated CORESET is applied.

A search space (dedicated search space) dedicated to the RACH procedure by the PDCH order may be set to the user equipment 10 together with the dedicated CORESET. In this case, for example, if the user equipment 10 receives PDCCH order in the search space #1 to which CORESET #1 is applied, the user equipment 10 switches CORESET and search space from (CORESET #1 + search space #1) to (dedicated CORESET + dedicated search space), and then receives the control information in the dedicated search space #1 to which the dedicated CORESET is applied.

The reception of the control information with the dedicated CORESET applied may be applied to all of the PDCCH reception for Msg2, the PDCCH reception for transmission of Msg3, the PDCCH reception for re-transmission of Msg3, the ack/nack reception for Msg3, the PDCCH reception for Msg4, the PDCCH reception for the re-transmission of Msg4, and the PDCCH reception for the ack/nack transmission of Msg4, or to any one of them, or some of them. In addition, the dedicated CORESET may be applied to the PDCCH reception for the transmission/reception of data following the RRC connection of the user equipment 10 with the base station 20.

The TCI state may not be specified to the dedicated CORESET. In addition, although a TCI state may be specified to the dedicated CORESET, the user equipment 10 may ignore the specified TCI state. That is, in the case that the dedicated CORESET is used, the base station 20 transmits Msg2 with PDCCH having QCL relation with SSB (or CSI-RS) selected by the user equipment 10, and the user equipment 10 receives Msg2 assuming that PDCCH is transmitted which has QCL relation with the SSB (or CSI-RS). In other words, the user equipment 10 assumes, upon reception of the Msg2, that Msg2 is transmitted from the base station 20 with a transmission beam corresponding to SSB selected by the user equipment 10 itself.

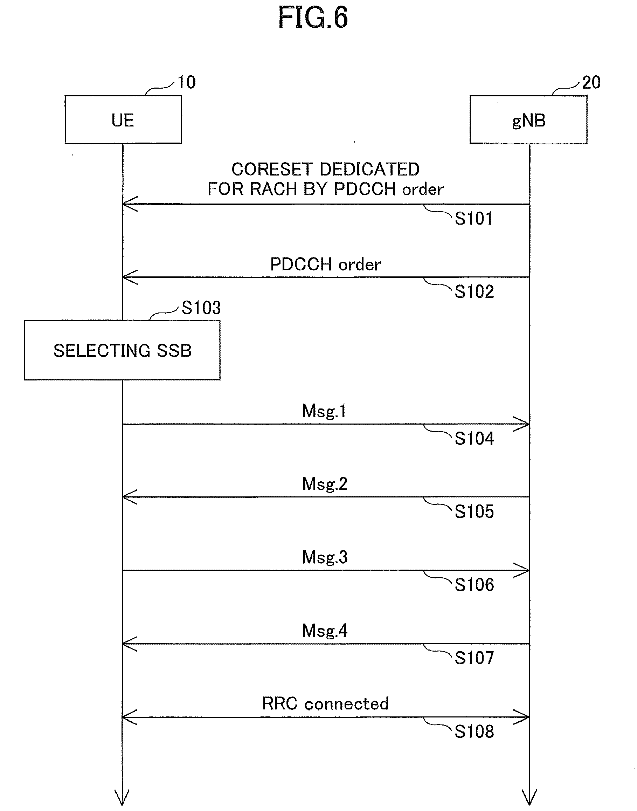

Fig. 6 shows an example of the sequence of the exemplary operation 1. In S101, the dedicated CORESET is configured from the base station 20 to the user equipment 10. In S102, the user equipment 10 receives PDCCH order for triggering RACH from the base station 20.

In S103, the user equipment 10 switches CORESET for receiving PDCCH from CORESET used for the reception of PDCCH order to the dedicated CORESET, and then selects SSB (that is, the transmission beam from the base station 20). It is noted that the CORESET may be switched after the selection of SSB or the transmission of Msg1. In addition, SSB may be selected before PDCCH order is received.

In S104, the user equipment 10 transmits Msg1 with a resource (RACH occasion) corresponding to the selected SSB. In S105, the user equipment 10 monitors the PDCCH of Msg2 using the dedicated CORESET to receive Msg2. The user equipment 10 transmits Msg3 in S106, receives Msg4 in S107, and establishes RRC connection in S108 .

In the exemplary operation 1, the dedicated CORESET is used, and thus the control information can be received with less congested resource even if the existing CORESET is congested.

### (EXEMPLARY OPERATION 2)

In the exemplary operation 2, when the user equipment 10 performs RACH procedure by PDCCH order, the user equipment 10 may fall back to a particular CORESET which is available for common to UEs such as CORESET used for the initial access, and use the particular CORESET. The particular CORESET may be referred to as a fallback-CORESET for the sake of convenience.

The fallback CORESET is used for the search space set in the user equipment 10 at the time of reception of PDCCH order. As an example, if the user equipment 10 receives PDCCH order in the search space #1 to which CORESET #1 is applied, the user equipment 10 switches CORESET from CORESET #1 to the fallback-CORESET, and receives control information after that in the search space #1 to which the fallback-CORESET is applied.

In addition, the fallback-CORESET may be applied to the search space (referred to as fallback-search space) where the fallback-CORESET has been originally applied. In this case, for example, if the user equipment 10 receives PDCCH order in the search space #1 to which CORESET #1 is applied, the user equipment 10 switches CORESET and search space from (CORESET #1 + search space #1) to (fallback-CORESET + fallback-search space), and then receives the control information in the fallback-search space to which the fallback-CORESET is applied.

In addition, regarding the selection of fallback-CORESET, for example, the user equipment 10 may select CORESET for the initial access corresponding to SSB selected after the reception of PDCCH order as the fallback-CORESET.

The CORESET for the initial access is, for example, the CORESET used by the user equipment 10 for reading RMSI. In addition, the CORESET for the initial access may be CORESET set to the user equipment 10 for RACH of the initial access.

Regarding CORESET for reading RMSI, for example, the user equipment 10 has already stored (or received for setting from the base station) the information of CORESET for each SSB (for each beam), and identifies CORESET corresponding to SSB selected after the reception of PDCCH order based on the information.

The reception of the control information with the fallback-CORESET applied may be applied to all of the PDCCH reception for Msg2, the PDCCH reception for transmission of Msg3, the PDCCH reception for re-transmission of Msg3, the ack/nack reception for Msg3, the PDCCH reception for Msg4, the PDCCH reception for the re-transmission of Msg4, and the PDCCH reception for the ack/nack transmission of Msg4, or to any one of them, or some of them. In addition, the fallback-CORESET may be applied to the PDCCH reception for the transmission/reception of data following the RRC connection of the user equipment 10 with the base station 20.

The TCI state may not be specified to the fallback-CORESET. In addition, although a TCI state may be specified to the fallback-CORESET, the user equipment 10 may ignore the specified TCI state. That is, in the case that the fallback-CORESET is used upon performing RACH procedure triggered by PDCCH order, the base station 20 transmits Msg2 with PDCCH having QCL relation with SSB (or CSI-RS) selected by the user equipment 10, and the user equipment 10 receives Msg2 assuming that PDCCH is transmitted which has QCL relation with the SSB (or CSI-RS).

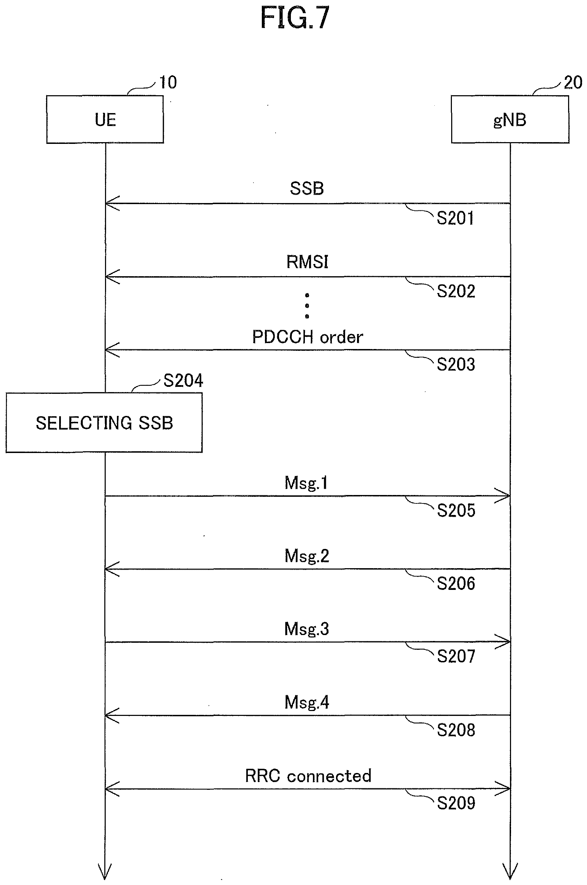

The sequence of the exemplary operation 2 will be described with reference to Fig. 7. Steps S201 and S202 indicate the reception of SSB and RMSI, respectively by the user equipment 10. For example, at the reception of RMSI, CORESET for initial access is used.

In S203, the user equipment 10 receives PDCCH order for triggering RACH from the base station 20.

In S204, the user equipment 10 switches CORESET for receiving PDCCH from CORESET used for the reception of PDCCH order to the fallback- CORESET, and then selects SSB (that is, the transmission beam from the base station 20). It is noted that CORESET may be switched after the selection of SSB.

In S205, the user equipment 10 transmit Msg1 with a resource (RACH occasion) corresponding to the selected SSB. In S206, the user equipment 10 monitors the PDCCH of Msg2 using the fallback-CORESET to receive Msg2. Msg2 is received under an assumption of QCL relation with the selected SSB. The user equipment 10 transmits Msg3 in S207, receives Msg4 in S208, and establishes RRC connection in S209.

In the exemplary operation 2, signaling for setting the dedicated CORESET is unnecessary, and thus overhead may be reduced.

### (EXEMPLARY OPERATION 3)

In the exemplary operation 3, in the case that RACH procedure by PDCCH order is performed, the user equipment 10 utilizes search space already configured to the user equipment 10 at that time and CORESET configured to the search space to receive the control information for the RACH procedure.

The search space already configured to the user equipment 10 is, for example, search space for random access (search space type 1). In the search space, PDCCH may be read by using RA-RNTI, TC-RNTI or C-RNTI, for example.

In addition, the search space already configured to the user equipment 10 may be UE-specific search space (PDCCH is read by C-RNTI, for example).

In the RACH procedure after the reception of PDCCH order, the user equipment 10 ignores TCI state specified by CORESET applied to search space already configured to the user equipment 10. That is, in the case that the RACH procedure by PDCCH order is performed, the base station 20 transmits Msg2 using PDCCH having QCL relation with SSB (or CSI-RS) selected by the user equipment 10, and the user equipment 10 receives Msg2 assuming that PDCCH is transmitted which has QCL relation with the SSB (or CSI-RS). This QCL relation is a TCI state which is different from one specified in CORESET applied to the search space already configured to the user equipment 10.

As an example, an assumption is made that the already configured search space is search space #1 and CORESET #1 is applied to search space #1. In this case, for example, the user equipment 10 receives PDCCH order in search space #1 to which CORESET #1 is applied, and the user equipment 10 continues to utilize search space #1 to which CORESET #1 is applied to receive subsequent control information. However, TCI state specified in CORESET #1 is ignored.

The reception of the control information with the already configured CORESET applied may be applied to all of the PDCCH reception for Msg2, the PDCCH reception for transmission of Msg3, the PDCCH reception for re-transmission of Msg3, the ack/nack reception for Msg3, the PDCCH reception for Msg4, the PDCCH reception for the re-transmission of Msg4, and the PDCCH reception for the ack/nack transmission of Msg4, or to any one of them, or some of them. In addition, the configured CORESET may be applied to the PDCCH reception for the transmission/reception of data following the RRC connection of the user equipment 10 with the base station 20.

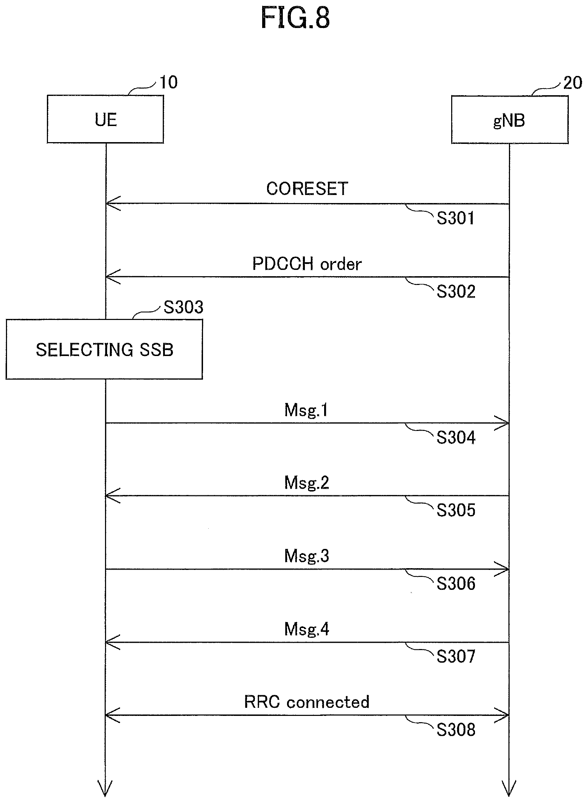

Fig. 8 shows an example of the sequence of the exemplary operation 3. In step S301, search space with specified CORESET is configured from the base station 20 to the user equipment 10. The search space is, for example, a search space used for random access (search space type 1) or the UE-specific search space.

In step S302, the user equipment 10 receives PDCCH order for triggering RACH from the base station 20.

In step S303, the user equipment 10 selects SSB (that is, a transmission beam from the base station 20). In S304, the user equipment 10 transmits Msg1 with a resource (RACH occasion) corresponding to the selected SSB. In S305, the user equipment 10 uses the already configured CORESET (however, the configured TCI state is ignored) to monitor PDCCH for Msg2 and receive Msg2. Msg2 is received under an assumption of QCL relation with the selected SSB. The user equipment 10 transmits Msg3 in S306, receives Msg4 in S307, and establishes RRC connection in S308.

According to the exemplary operation 3, the reception of control information is enabled without the switching of CORESET, which enables faster processing.

### (EXEMPLARY OPERATION 4)

The exemplary example 4 is described as an example which is applicable to any one of the exemplary operation 1-3.

In RACH procedure by PDCCH order, when the user equipment 10 selects SSB, SSBs which are selectable for the user equipment 10 may be limited based on TCI state(s) specified in CORESET by RRC signaling, for example, corresponding to the search space for random access. Accordingly, RACH occasions selectable for the user equipment 10 is limited too.

For example, the user equipment 10 may freely select SSB (or CSI-RS) from multiple SSBs corresponding the set TCI state(s), and then transmit corresponding Msg1.

As an example, in the case that TCI state #1 (example: corresponding to SSB #1), TCI state #2 (example: corresponding to SSB #2) and TCI state #3 (example: corresponding to SSB #3) are set to CORESET corresponding to search space for random access, the user equipment 10 selects one of SSB #1, SSB #2 and SSB #3 in RACH procedure by PDCCH order. It is noted that, although an assumption is made that SSB selectable by the user equipment 10 is limited based on TCI state(s) set to corresponding CORESET by RRC signaling, for example, corresponding to search space for random access, search space based on which processing is performed may be search space other than the search space for random access.

In the exemplary operation 1 through 4 discussed above, an example in which the user equipment 10 selects SSB has been described, which is exemplary. The exemplary operations 1 through 4 may be applicable to the case in which the user equipment 10 selects CSI-RS, and transmits Msg1 with RACH occasion corresponding to the CSI-RS. In addition, both SSB and CSI-RS are exemplary. The above-mentioned exemplary operations 1 through 4 may be applied to the case of selecting signals or information other than SSB and CSI-RS.

### (Other examples)

Exemplary features which are applicable to the exemplary operations 1 through 4 are explained below.

In NR which is assumed as a method according to the present embodiment, the bandwidth (herein, downlink bandwidth for focusing reception) of a channel provided by the base station 20 to which the user equipment 10 accesses may be divided into multiple parts, each of which may be referred to as "bandwidth part" (hereinafter referred to as BWP in short). In addition, for example, if the base station 20 allows a user equipment 10 to use 2 parts in a bandwidth, the base station 20 may allocate BWP1 and BWP2 for the user equipment 10. In addition, the base station 20 may activate/deactivate each BWP for the user equipment 10.

The exemplary operations 1 through 4 described above may be performed with the assumption that the search space and CORESET are set to each BWP allocated to the user equipment 10.

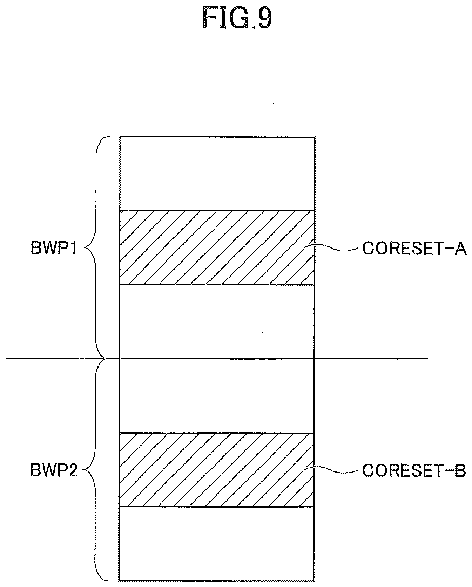

For example, as shown in Fig. 9, an assumption is made that BWP1 and BWP2 are allocated to the user equipment 10, and a shaded resource blocks in BWP1 are set as CORESET-A, and a shaded resource block resource block sin BWP2 are set as CORESET-B.

For setting search space and CORESET to all BWP, in the exemplary operation 1, for example, CORESET-A is the existing CORESET (CORESET for receiving PDCCH order) and CORESET-B is the dedicated CORESET. In this case, the user equipment 10 switches CORESET-A to CORESET-B. That is, in this case, when RACH is triggered by PDCCH order, BWP is switched. In an example shown in Fig. 9, even if BWP2 is not active upon (just before) the reception of PDCCH order, BWP2 is activated at the time of switching.

In addition, the exemplary operation 1-4 described above may be performed in light of any one, some or all of: the setting of search space and CORESET in currently active BWP at the user equipment 10; the setting of search space and CORESET in BWP for initial access (initial active bandwidth part); and the setting of search space and CORESET in specified BWP by PDCCH order.

In the case that the user equipment 10 sets search space and CORESET in an active BWP, an assumption is made that only BWP1 is active, for example. In this case, for example, in the exemplary operation 1, a dedicated CORESET is set to BWP1, and CORESET in BWP1 is switched.

In addition, the operation of RACH by PDCH order may be changed according to configuration information set at the user equipment 10 for each BWP.

For example, if search space for random access is set in the currently active BWP, the user equipment 10 may determine that the exemplary operation 3 is to be performed, and use the search space. For example, if search space for random access is not set in the currently active BWP, the user equipment 10 may determine that the exemplary operation 2 is to be performed, and use fallback-CORESET.

### (DEVICE CONFIGURATION)

The functional structure of the user equipment 10 and the base station 20 which perform the aforementioned processing is described below. The user equipment 10 and the base station 20 have all function described in the present embodiments. However, the user equipment 10 and the base station 20 may have only a part of all functions described in the present embodiments. In addition, the user equipment 10 and the base station 20 may be collectively referred to as a communication device.

### (User equipment)

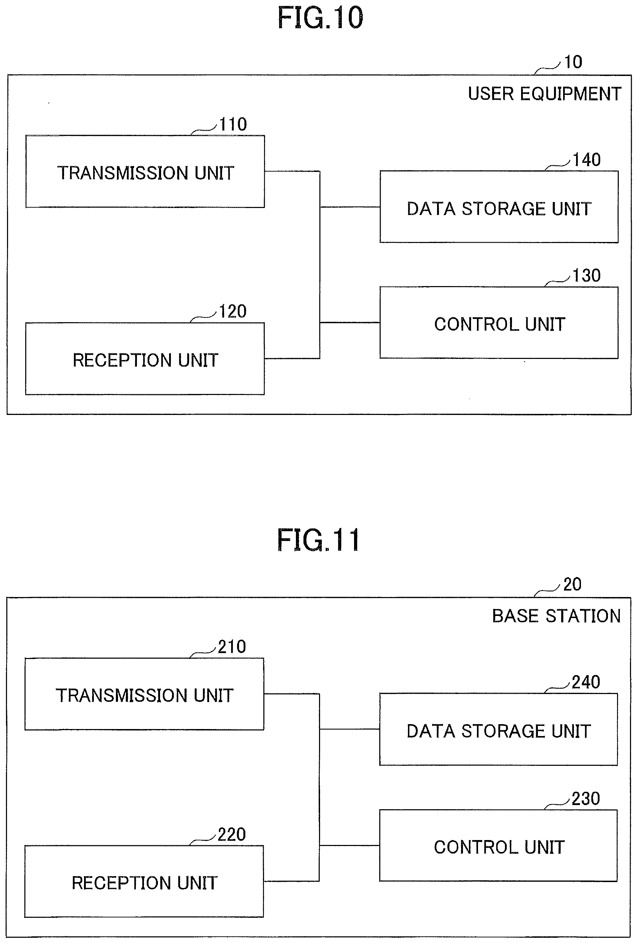

Fig. 10 shows an exemplary functional structure of the user equipment 10. As shown in Fig. 10, the user equipment 10 includes transmission unit 110, reception unit 120, control unit 130 and data storage unit 140. The functional structure shown in Fig. 10 is merely exemplary. As long as the functional sections and functional units can implement the operation according to the present embodiments the names of the functional sections and functional units do not matter. In addition, the transmission unit 110 may be referred to as a transmitter, and the reception unit 120 may be referred to as a receiver.

The transmission unit 110 generates a transmission signal from transmission data and transmits the transmission signal wirelessly. In addition, the transmission unit 110 may form one or more beams. The reception unit 120 receives various signals wirelessly, and extract upper layer signals from the received PHY layer signals. In addition, the reception unit 120 includes a measurement unit to measure the received signal and obtain reception power.

The control unit 130 controls the user equipment 10. The function of the control unit 130 related to transmission may be included in the transmission unit 110, and the function of the control unit 130 related to reception may be included in the reception unit 120. The data storage unit 140 stores, for example, configuration information. It is noted that configuration information related to transmission may be stored in the transmission unit 110, and configuration information related to reception may be stored in the reception unit 120.

For example, the reception unit 120 is configured to receive control information from the base station; the transmission unit 110 is configured to select a resource for transmitting random access signal and transmit the random access signal to the base station using the resource; and the reception unit 120 is configured to use a resource dedicated to random access procedure based on the trigger, and monitor responses to the random access signal.

In addition, for example, the reception unit 120 may be configured to use a resource used for the initial access to the base station to monitor responses to the random access signal.

The reception unit 120 may be configured to use a resource for monitoring control information, the resource having set upon the reception the control information to monitor responses to the random access signal. In this case, the reception unit 120 may ignore quasi-colocation relation corresponding to the resource for monitoring the control information.

The reception unit 120 may select a signal (SSB or CSI-RS, for example) from multiple signals transmitted from the base station with a certain beam; the transmission unit may determine a resource corresponding to the signal and transmit the random access signal using the resource; and the reception unit may monitor the response assuming that the response and the signal have the quasi-colocation relation.

In addition, the reception unit 120 may control the number of multiple signals which are candidates for the selection based on configuration information related to the quasi-colocation relation in a predetermined search space.

### (Base station 20)

Fig. 11 shows an exemplary functional structure of the base station 20. As shown in Fig. 11, the user equipment 20 includes transmission unit 210, reception unit 220, control unit 230 and data storage unit 240. The functional structure shown in Fig. 11 is merely exemplary. As long as the functional sections and functional units can implement the operation according to the present embodiments the names of the functional sections and functional units do not matter. In addition, the transmission unit 210 may be referred to as a transmitter, and the reception unit 220 may be referred to as a receiver.

The transmission unit 210 may include functions to generate and wirelessly transmit a signal to be transmitted to the user equipment 10. In addition, the transmission unit 210 forms one or more beams. The reception unit 220 may include functions to receive various signals from the user station 10, and to extract upper layer information from the received signal, for example. In addition, the reception unit 220 includes a measurement unit to measure the received signal and obtain reception power.

The control unit 230 controls the base station 20. The function of the control unit 230 related to transmission may be included in the transmission unit 210, and the function of the control unit 230 related to reception may be included in the reception unit 220. The data storage unit 240 stores, for example, configuration information. It is noted that configuration information related to transmission may be stored in the transmission unit 210, and configuration information related to reception may be stored in the reception unit 220.

### (HARDWARE STRUCTURE)

Block diagrams (Figs. 10-11) referred to for the description of the present embodiments indicates blocks of functional units. These functional blocks (configuration units) may be implemented by an arbitrary combination of hardware and/or software. In addition, means for implementing each functional block are not limited. That is, each functional block may be implemented by a single device in which multiple elements are physically and/or logically combined or by two or more devices physically and/or logically separated but directly and/or indirectly connected (wired and/or wireless, for example).

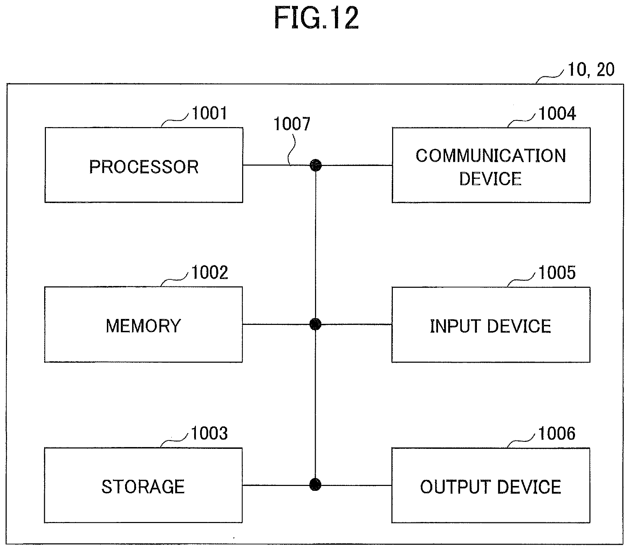

In addition, for example, the user equipment 10 and base station 20 both may function as a computer which performs processing according to the present embodiment. Fig. 12 is a schematic diagram showing exemplary hardware structures of the user equipment 10 and base station 20 according to the present embodiment. The aforementioned user equipment 10 and base station 20 each may physically implemented as a computer device including a processor 1001, a memory 1002, a storage 1003, a communication device 1004, an input device 1005, an output device 1006, a bus 1007, for example.

In the following description, the term "device" may be replaced with circuit, apparatus, or unit, for example. The hardware configuration of the user equipment 10 and base station 20 may be configured to include one or more of the units designated by 1001-1006, and may be configured without some of the units.

Each function of the user equipment 10 and base station 20 may be implemented by the processor 1001 performing operations and controlling the communication of the communication device 1004 and data read/write of the memory 1002 and the storage 1003 using predetermined software (program) loaded into hardware such as the processor 1001 and memory 1002.

The processor 1001 may, for example, control the entire computer by running an operating system. The processor 1001 may be constituted by a central processing unit (CPU) including an interface with peripherals, a control unit, a calculation unit, a register, and the like.

The processor 1001 reads a program (program codes), a software module, or data from the storage 1003 and/or the communication unit 1004 to the memory 1002 and performs various processes in accordance therewith. As the program, a program causing a computer to perform at least a part of the operations described above in the embodiment is used. For example, the transmission unit 110, reception unit 120, control unit 130, and data storage unit 140 of the user equipment 10 shown in Fig. 10 may be embodied by control programs which are stored in the storage device 1002 and run on the processor 1001. For example, the transmission unit 210, reception unit 220, control unit 230, and data storage unit 240 of the base station 20 shown in Fig. 11 may be embodied by control programs which are stored in the memory 1002 and run on the processor 1001. It is described that the aforementioned various processing is performed by a single processor 1001, the processing may be performed by two or more processors 1001 simultaneously or serially. The processor 1001 may be implemented by one or more chips. The program may be transmitted from the network via a telecommunication circuit.

The memory 1002 is a computer-readable recording medium and may be constituted, for example, by at least one of a read only memory (ROM), an erasable programmable ROM (EPROM), an electrically erasable programmable ROM (EEPROM), and a random access memory (RAM). The memory 1002 may be referred to as a register, a cache, or a main memory (a main storage unit). The memory 1002 can store a program (program codes), a software module, data, or the like which can be used to perform the processes according to the embodiment of the invention.

The storage 1003 is a computer-readable recording medium and may be constituted, for example, by at least one of an optical disc such as a compact disc ROM (CD-ROM), a hard disk drive, a flexible disk, a magneto-optical disk (such as a compact disk, a digital versatile disk, or a Blu-ray (registered trademark) disk), a smart card, a flash memory (such as a card, a stick, or a key drive), a floppy (registered trademark) disk, and a magnetic strip. The storage 1003 may be referred to as an auxiliary storage unit. Examples of the recording medium may include a database including the memory 1002 and/or the storage 1003, a server, and another appropriate medium.

The communication device 1004 is hardware (a transceiver device) that allows communication between computers via a wired and/or wireless network and is referred to as, for example, a network device, a network controller, a network card, or a communication module. For example, the transmission unit 110 and reception unit 120 of the user equipment 10 may be embodied as the communication device 1004. In addition, the transmission unit 210 and reception unit 220 of the base station 20 may be embodied as the communication device 1004.

The input device 1005 is an input device (such as a keyboard, a mouse, a microphone, a switch, a button, or a sensor) that receives an input from the outside. The output device 1006 is an output device (such as a display, a speaker, or an LED lamp) that performs outputting to the outside. The input device 1005 and the output device 1006 may be configured as a unified body (such as a touch panel).

The units such as the processor 1001 and the memory 1002 are connected to each other via the bus 1007 for transmitting and receiving information. The bus 1007 may be constituted by a single bus or may be configured by different buses for the units.

The user equipment 10 and the base station 20 may be configured to include hardware such as a microprocessor, a digital signal processor (DSP), an application specific integrated circuit (ASIC), a programmable logic device (PLD), or a field programmable gate array (FPGA) or a part or all of the functional blocks may be embodied by the hardware. For example, the processor 1001 may be implemented as at least one hardware module.

### (SUPPLEMENTAL REMARKS ON EMBODIMENTS)

While embodiments of the invention have been described above, the disclosed inventions are not limited to the embodiments. While specific numerical examples have been used to facilitate understanding of the invention, the numerical values are only an example and any suitable values may be used, unless otherwise specified. The sorting of articles in the above description is not essential to the invention, but details described in two or more articles may be combined for use if necessary, or details of a certain article may be applied to details described in another article (unless incompatible). The boundaries of the functional units or the processing units in the functional block diagrams cannot be said to correspond to boundaries of physical components. The operations of multiple functional units may be performed by a single physical component or the operation of a single functional unit may be performed by multiple physical components. The order of processing discussed in the embodiment may be changed as long as no contradiction occurs. For convenience of explanation, the user equipment 10 and the base station 20 were described using functional block diagrams, but such apparatuses may be implemented by hardware, software, or a combination thereof. Software run on the processor of the user equipment 10 according to the embodiment of the present invention, and software operating by the processor of the base station 20 according to the embodiment of the present invention may be stored in any suitable storage medium such as random access memory (RAM), flash memory, read only memory (ROM), EPROM, EEPROM, register, hard disk (HDD), removable disk, CD-ROM, database, server and the like.

Notification of information is not limited to the aspects/embodiments described in this specification, but may be performed using other methods. For example, the notification of information may be performed physical layer signaling (such as downlink control information (DCI) or uplink control information (UCI)), upper layer signaling (such as radio resource control (RRC) signal, medium access control (MAC) signaling, or broadcast information (master information block (MIB) and system information block (SIB))), other signals, or combinations thereof. The RRC signaling may be referred to as an RRC message and may be, for example, an RRC connection setup message or an RRC connection reconfiguration message.

The aspects/embodiments described in this specification may be applied to systems employing long term evolution (LTE), LTE-advanced (LTE-A), SUPER 3G, IMT-Advanced, 4G, 5G, future radio access (FRA), W-CDMA (registered trademark), GSM (registered trademark), CDMA2000, ultra mobile broadband (UMB), IEEE 802.11 (Wi-Fi), IEEE 802.16 (WiMAX), IEEE 802.20, ultra-wideband (UWB), Bluetooth (registered trademark), or other appropriate systems and/or next-generation systems to which the systems are extended.

The processing sequences, the sequences, and the like of the embodiment/examples described above in this specification may be changed in the order as long as they are not incompatible with each other. For example, in the method described in this specification, various steps as elements are described in an exemplary order and the method is not limited to the described order.

Specific operations which are performed by the base station 20 in this specification may be performed by an upper node thereof in some cases. In a network including one or more network nodes including a base station 20, various operations which are performed to communicate with a user equipment 10 can be apparently performed by the base station 20 and/or network nodes (for example, an MME or an S-GW can be considered but the network nodes are not limited thereto) other than the base station 20. A case in which the number of network nodes other than the base station 20 is one has been described above, but a combination of plural different network nodes (for example, an MME and an S-GW) may be used.

The aspects described in this specification may be used alone, may be used in combination, or may be switched with implementation thereof.

The user equipment 10 may also be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or several appropriate terms by those skilled in the art.

The base station 20 may be referred to as a NodeB (NB), an enhanced NodeB (eNB), a base station, gNB or some other appropriate terms by those skilled in the art.

The terms "determining (determining)" and "deciding (determining)" used in this specification may include various types of operations. For example, "determining" and "deciding" may include deeming that to perform judging, calculating, computing, processing, deriving, investigating, looking up (e.g., search in a table, a database, or another data structure), or ascertaining is to perform "determining" or "deciding". Furthermore, "determining" and "deciding" may include deeming that to perform receiving (e.g., reception of information), transmitting (e.g., transmission of information), input, output, or accessing (e.g., accessing data in memory) is to perform "determining" or "deciding". Furthermore, "determining" and "deciding" may include deeming that to perform resolving, selecting, choosing, establishing, or comparing is to perform "determining" or "deciding". Namely, "determining" and "deciding" may include deeming that some operation is to perform "determining" or "deciding".

An expression "on the basis of -" which is used in this specification does not refer to only "on the basis of only ∼," unless apparently described. In other words, the expression "on the basis of -" refers to both "on the basis of only -" and "on the basis of at least ∼."

So long as terms "include" and "including" and modifications thereof are used in this specification or the appended claims, the terms are intended to have a comprehensive meaning similar to a term "comprising." A term "or" which is used in this specification or the claims is intended not to mean an exclusive or.

In the entire disclosure, for example, when an article such as "a," "an," or "the" is added in translation into English, such an article refers to including the plural unless otherwise recognized from the context.

The present invention has been described in detail. It would be obvious for those skilled in the art that the present invention is not limited to the embodiments described herein. Therefore, the description of the present specification is for illustrative purposes and has no restrictive meaning to the present invention.

### EXPLANATIONS OF LETTERS OR NUMERALS

- 10: User equipment
- 110: Transmission unit
- 120: Reception unit
- 130: Control unit
- 140: Data storage unit
- 20: Base station
- 210: Transmission unit
- 220: Reception unit
- 230: Control unit
- 240: Data storage unit
- 1001: Processor
- 1002: Memory
- 1003: Storage
- 1004: Communication device
- 1005: Input device
- 1006: Output device

## Claims

1. A terminal (10) comprising:
a reception unit (120) configured to receive control information that is a trigger for initiating a random access procedure;
a control unit (130) configured to select an occasion for transmitting a random access preamble; and
a transmission unit (110) configured to transmit the random access preamble using the occasion,
wherein the reception unit (120) is configured to receive a response to the random access preamble using a resource for monitoring control information for receiving the response to the random access preamble, by assuming quasi co-location not related to quasi co-location that is associated with the resource for monitoring the control information.

2. The terminal (10) as claimed in claim 1,
wherein the control unit (130) is configured to select a synchronization signal block, and select the occasion corresponding to the synchronization signal block, and
the reception unit (120) is configured to assume quasi co-location with the synchronization signal block when receiving the response.

3. The terminal (10) as claimed in claim 2,
wherein the synchronization signal block is associated with a beam.

4. A response reception method executed by a terminal, comprising:
Receiving (S102, S203, S302) control information that is a trigger for initiating a random access procedure;
Selecting (S103, S204, S303) an occasion for transmitting a random access preamble;
Transmitting (S104, S205, S304) the random access preamble using the occasion, and
Receiving (S105, S206, S305) a response to the random access preamble using a resource for monitoring control information for receiving the response to the random access preamble, by assuming quasi co-location not related to quasi co-location that is associated with the resource for monitoring the control information.

5. A base station (20) comprising:
a transmission unit (210) configured to transmit control information that is a trigger for initiating a random access procedure; and
a reception unit (220) configured to receive a random access preamble transmitted using an occasion for transmitting the random access preamble that is selected;
wherein the transmission unit (210) is configured to transmit a response to the random access preamble using a resource for monitoring control information for transmitting the response to the random access preamble, by assuming quasi co-location not related to quasi co-location that is associated with the resource for monitoring the control information.

## Patentansprüche

1. Endgerät (10), umfassend:
eine Empfangseinheit (120), die konfiguriert ist, um Steuerinformationen zu empfangen, die ein Auslöser für die Einleitung eines Zufallszugriffsverfahrens sind;
eine Steuereinheit (130), die konfiguriert ist, um einen Anlass zum Übertragen einer Zufallszugriffs-Präambel auszuwählen; und
eine Übertragungseinheit (110), die konfiguriert ist, um die Zufallszugriffs-Präambel unter Verwendung des Anlasses zu übertragen,
wobei die Empfangseinheit (120) konfiguriert ist, um eine Antwort auf die Zufallszugriffs-Präambel unter Verwendung einer Ressource zum Überwachen von Steuerinformationen zum Empfangen der Antwort auf die Zufallszugriffs-Präambel, durch Annehmen einer Quasi-Kolokation, die nicht mit der Quasi-Kolokation zusammenhängt, die mit der Ressource zum Überwachen der Steuerinformationen verbunden ist, zu empfangen.

2. Endgerät (10) nach Anspruch 1,
wobei die Steuereinheit (130) konfiguriert ist, um einen Synchronisationssignalblock auszuwählen und die Gelegenheit auszuwählen, die dem Synchronisationssignalblock entspricht, und
die Empfangseinheit (120) konfiguriert ist, um eine Quasi-Kolokation mit dem Synchronisationssignalblock anzunehmen, wenn die Antwort empfangen wird.

3. Endgerät (10) nach Anspruch 2,
wobei der Synchronisationssignalblock mit einem Strahl verbunden ist.

4. Antwort-Empfangsverfahren, das von einem Endgerät ausgeführt wird, umfassend:
Empfangen (S102, S203, S302) von Steuerinformationen, die ein Auslöser für das Einleiten eines Zufallszugriffsverfahrens sind;
Auswählen (S103, S204, S303) einer Gelegenheit zum Übertragen einer Zufallszugriffs-Präambel;
Übertragen (S104, S205, S304) der Zufallszugriffs-Präambel unter Verwendung des Anlasses, und
Empfangen (S105, S206, S305) einer Antwort auf die Zufallszugriffs-Präambel unter Verwendung einer Ressource zum Überwachen von Steuerinformationen zum Empfangen der Antwort auf die Zufallszugriffs-Präambel, durch Annehmen einer Quasi-Kolokation, die nicht mit der Quasi-Kolokation zusammenhängt, die mit der Ressource zum Überwachen der Kontrollinformationen verbunden ist.

5. Basisstation (20), umfassend:
eine Übertragungseinheit (210), die konfiguriert ist, um Steuerinformationen zu übertragen, die ein Auslöser für das Einleiten eines Zufallszugriffsverfahrens sind; und
eine Empfangseinheit (220), die konfiguriert ist, um eine Zufallszugriffs-Präambel zu empfangen, die unter Verwendung eines ausgewählten Anlasses für die Übertragung der Zufallszugriffs-Präambel übertragen wird;
wobei die Übertragungseinheit (210) konfiguriert ist, um eine Antwort auf die Zufallszugriffs-Präambel unter Verwendung einer Ressource zum Überwachen von Steuerinformationen zum Übertragen der Antwort auf die Zufallszugriffs-Präambel, durch Annehmen einer Quasi-Kolokation, die nicht mit der Quasi-Kolokation zusammenhängt, die mit der Ressource zum Überwachen der Steuerinformationen verbunden ist, zu übertragen.

## Revendications

1. Terminal (10) comprenant :
une unité de réception (120) configurée pour recevoir des informations de commande qui sont un déclencheur pour lancer une procédure d'accès aléatoire ;
une unité de commande (130) configurée pour sélectionner une occasion pour transmettre un préambule d'accès aléatoire ; et
une unité de transmission (110) configurée pour transmettre le préambule d'accès aléatoire en utilisant l'occasion,
dans lequel l'unité de réception (120) est configurée pour recevoir une réponse au préambule d'accès aléatoire en utilisant une ressource pour surveiller des informations de commande pour recevoir la réponse au préambule d'accès aléatoire, en supposant une quasi-colocalisation non liée à une quasi-colocalisation qui est associée à la ressource pour surveiller les informations de commande.

2. Terminal (10) selon la revendication 1,
dans lequel l'unité de commande (130) est configurée pour sélectionner un bloc de signal de synchronisation, et sélectionner l'occasion correspondant au bloc de signal de synchronisation, et
l'unité de réception (120) est configurée pour supposer une quasi-colocalisation avec le bloc de signal de synchronisation lors de la réception de la réponse.

3. Terminal (10) selon la revendication 2,
dans lequel le bloc de signal de synchronisation est associé à un faisceau.

4. Procédé de réception de réponse exécuté par un terminal, comprenant :
la réception (S102, S203, S302) d'informations de commande qui sont un déclencheur pour lancer une procédure d'accès aléatoire ;
la sélection (S103, S204, S303) d'une occasion pour transmettre un préambule d'accès aléatoire ;
la transmission (S104, S205, S304) du préambule d'accès aléatoire en utilisant l'occasion, et
la réception (S105, S206, S305) d'une réponse au préambule d'accès aléatoire en utilisant une ressource pour surveiller des informations de commande pour recevoir la réponse au préambule d'accès aléatoire, en supposant une quasi-colocalisation non liée à une quasi-colocalisation qui est associée à la ressource pour surveiller les informations de commande.

5. Station de base (20) comprenant :
une unité de transmission (210) configurée pour transmettre des informations de commande qui sont un déclencheur pour lancer une procédure d'accès aléatoire ; et
une unité de réception (220) configurée pour recevoir un préambule d'accès aléatoire transmis en utilisant une occasion pour transmettre le préambule d'accès aléatoire qui est sélectionné ;
dans laquelle l'unité de transmission (210) est configurée pour transmettre une réponse au préambule d'accès aléatoire en utilisant une ressource pour surveiller des informations de commande pour transmettre la réponse au préambule d'accès aléatoire, en supposant une quasi-colocalisation non liée à une quasi-colocalisation qui est associée à la ressource pour surveiller les informations de commande.
